# FASCICULE DE BREVET EUROPEEN

(11) **EP 2 849 958 B1**
(45) Date de publication et mention de la délivrance du brevet: **05.12.2018**
(21) Numéro de dépôt: 13731353.2
(22) Date de dépôt: 15.05.2013
(51) Int. Cl.: B60D 1/54, B60D 1/14, B60D 1/00

(54) **DISPOSITIF DE TRANSPORT MUNI D'UN TIMON D'ATTELAGE**
TRANSPORTVORRICHTUNG MIT EINER ZUGSTANGE
TRANSPORT DEVICE PROVIDED WITH A DRAWBAR

(30) Priorité: 15.05.2012 FR 1254454
(43) Date de publication de la demande: 25.03.2015
(73) Titulaire: YTHALES INVEST, 37520 La Riche (FR)
(72) Inventeur: CHERBONNIER, Yves, F-37000 Tours (FR)
(74) Mandataire: den Braber, Gérard Paul
(86) Numéro de dépôt international: PCT/FR2013/051063
(87) Numéro de publication internationale: WO 2013/171429

(56) Documents cités:
- DE-A1-102004 061 440
- DE-A1-102007 024 761
- US-A- 4 863 179
- US-A1- 2007 138 760
- US-B1- 7 185 911

## Description

### DOMAINE TECHNIQUE

Un aspect de l'invention concerne un dispositif de transport muni d'un timon d'attelage. Le dispositif de transport peut être, par exemple, un chariot de manutention pour transporter des objets.

### ETAT DE LA TECHNIQUE ANTERIEURE

Un chariot de manutention est avantageusement muni d'un timon d'attelage. Le timon d'attelage permet d'établir une liaison de remorquage avec un autre chariot de manutention, ou un dispositif tracteur, muni d'un crochet d'attelage. Pour établir cette liaison, le crochet d'attelage s'engage dans une ouverture présente dans le timon d'attelage. Ainsi, il est possible de créer une chaîne de chariots de manutention avec un dispositif tracteur en tête de cette chaîne.

La demande de brevet français publiée sous le numéro FR 2 800 676 A1 décrit un dispositif d'attelage pour chariot de manutention. Un timon prévu à l'avant du chariot est propre à coopérer avec un crochet prévu à l'arrière d'un tracteur, en particulier d'un chariot précédent dans une file de chariots. Le timon comporte une fente longitudinale. Le crochet peut coulisser dans cette fente longitudinale entre une position éloignée en laquelle le chariot est à une distance maximale du tracteur pendant le remorquage, et une position rapprochée en laquelle le chariot est à une distance minimale du tracteur pour diminuer l'encombrement à l'arrêt.

### EXPOSE DE L'INVENTION

Il existe un besoin pour une solution pour établir une liaison de remorquage qui présente des avantages sur le plan de l'encombrement, et sur le plan de la facilité d'utilisation.

Selon l'invention, un dispositif de transport est muni d'un timon d'attelage ayant une ouverture pouvant accueillir un crochet d'un autre dispositif de transport afin d'établir une liaison de remorquage entre l'un et l'autre dispositif de transport, le timon d'attelage étant fixé au dispositif de transport par l'intermédiaire d'un agencement de coulissement de sorte que le timon d'attelage puisse translater entre une position de remorquage en laquelle le timon d'attelage est au maximum sorti du dispositif de transport, et une position de rangement en laquelle le timon d'attelage est au maximum rentré dans le dispositif de transport, caractérisé en ce que l'agencement de coulissement comprend une base coulissante à laquelle le timon d'attelage est fixé et au moins un rail de guidage sur lequel la base coulissante peut coulisser, ainsi qu'un agencement de relevage disposé entre la base coulissante et le timon d'attelage et apte à exercer une force de relevage sur le timon d'attelage de sorte que lorsque l'ouverture du timon d'attelage accueille un crochet d'attelage d'un autre dispositif de transport, le timon d'attelage s'oppose à se libérer du crochet d'attelage.

La position de remorquage permet à une chaîne de chariots de manutention de posséder un rayon de braquage relativement faible. Ainsi, la chaîne de chariots de manutention peut faire des demi-tours relativement serrés. La position de rangement permet à la chaîne de chariots de manutention d'occuper un espace relativement faible lorsque cette chaîne est en arrêt.

Il convient de noter que, dans un dispositif de transport conforme à l'invention, la force de relevage exercé sur le timon d'attelage reste sensiblement constante lorsque le timon d'attelage effectue une translation entre la position de remorquage et la position de rangement. Lors d'une utilisation, le timon d'attelage peut donc librement translater tout en restant bien engagé dans le crochet d'attelage de l'autre dispositif de transport, grâce à la force de relevage constante.

Un mode de réalisation de l'invention comprend avantageusement une ou plusieurs des caractéristiques supplémentaires suivantes, lesquelles sont décrites dans les paragraphes suivants.

L'agencement de relevage peut comprendre un ressort reliant un point d'encrage sur le timon d'attelage à un point d'encrage sur la base coulissante.

Le timon d'attelage est avantageusement fixé à la base coulissante par l'intermédiaire d'un agencement d'articulation.

Le dispositif de transport peut être sous forme d'un chariot de manutention apte à transporter des objets.

Une description détaillée en référence à des dessins illustre l'invention brièvement exposée précédemment, ainsi que les caractéristiques supplémentaires identifiées précédemment.

### DESCRIPTION SOMMAIRE DES DESSINS

- La figure 1 est un diagramme schématique illustrant une vue de côté d'un chariot de manutention.
- La figure 2 est un diagramme schématique illustrant une vue de dessus d'un timon d'attelage et d'un agencement de coulissement faisant partie du chariot de manutention illustré à la figure 1.
- La figure 3 est un diagramme schématique illustrant une vue de côté du timon d'attelage et de l'agencement de coulissement.
- La figure 4 est un diagramme schématique illustrant une vue de côté d'une liaison de remorquage entre le chariot de manutention et un autre chariot de manutention, en laquelle le crochet d'attelage est en une position de remorquage.
- La figure 5 est un diagramme schématique illustrant une vue de côté d'une liaison de remorquage entre le chariot de manutention et un autre chariot de manutention, en laquelle le crochet d'attelage est en une position intermédiaire.
- La figure 6 est un diagramme schématique illustrant une vue de côté d'une liaison de remorquage entre le chariot de manutention et un autre chariot de manutention, en laquelle le crochet d'attelage est en une position de rangement.

### DESCRIPTION DETAILLEE

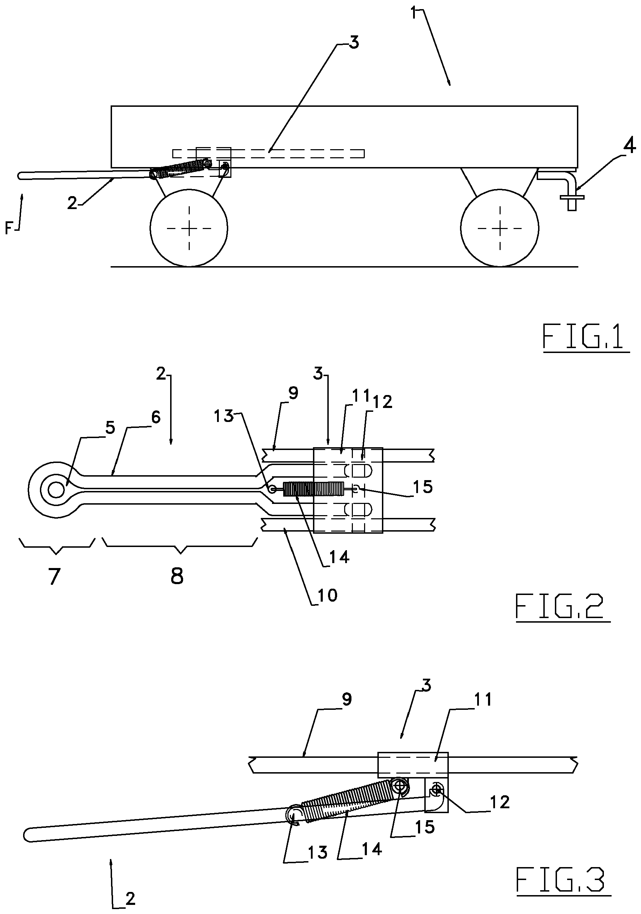

La figure 1 illustre schématiquement un chariot de manutention 1 par une vue de côté. Le chariot de manutention 1 est muni d'un timon d'attelage 2. Le timon d'attelage 2 est fixé au chariot de manutention 1 par l'intermédiaire d'un agencement de coulissement 3. Le chariot de manutention 1 est également muni d'un crochet d'attelage 4.

La figure 2 illustre schématiquement et plus en détail le timon d'attelage 2 et l'agencement de coulissement 3 par une vue de dessus. Le timon d'attelage 2 comprend une ouverture 5 qui peut accueillir un crochet d'attelage d'un autre chariot de manutention. Dans cet exemple, le timon d'attelage 2 est sous forme d'une barre repliée 6. Cette barre repliée 6 comprend une section 7 sous forme d'un anneau. Cette section 7 définit l'ouverture 5 du timon d'attelage 2. La barre repliée 6 comprend également une section 8 avec deux parties droites en parallèle et rapprochées l'une à l'autre.

L'agencement de coulissement 3 comprend une paire de rails de guidage 9, 10 et une base coulissante 11. La base coulissante 11 est sous forme d'une boîte qui enveloppe les rails de guidage 9, 10. Le timon d'attelage 2 est fixé à la base coulissante 11.par l'intermédiaire d'un agencement d'articulation 12.

Le timon d'attelage 2 est muni d'un point d'ancrage 13. Un ressort 14 relie ce point d'ancrage 13 à un point d'ancrage 15 sur la base coulissante 11. Le ressort 14 exerce une force de relevage sur le timon d'attelage 2 symbolisée par une flèche F à la figure 1. Par cette force, le timon d'attelage 2 adopte une position telle qu'illustrée à la figure 1 lorsque le timon d'attelage 2 est en état libre et aucune autre force n'est exercée sur le timon d'attelage 2.

La figure 3 illustre schématiquement le timon d'attelage 2 et l'agencement de coulissement 3 par une vue de côté. Par conséquent, il n'y à qu'un seul rail de guidage 9 qui apparaît dans cette figure. Le point d'ancrage 15 sur la base coulissante 11 et l'agencement d'articulation 12 sont clairement visibles dans cette figure.

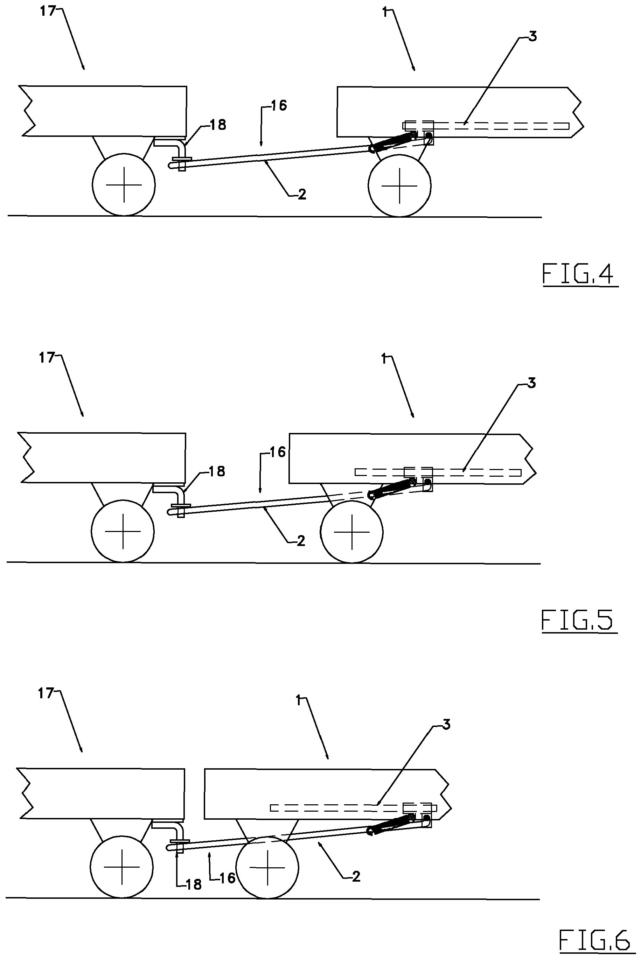

Les figures 4, 5, et 6 illustrent schématiquement une liaison de remorquage 16 entre le chariot de manutention 1 illustré à la figure 1 et un autre chariot de manutention 17 par une vue de côté. Dans ces figures, l'ouverture 5 du timon d'attelage 2 illustré à la figure 2 accueille un crochet d'attelage 18 de l'autre chariot de manutention 17. La liaison de remorquage 16 est ainsi établie. Le crochet d'attelage 18 de l'autre chariot de manutention 17 peut être similaire, par exemple, au crochet d'attelage 4 illustré à la figure 1.

Il convient de noter que le ressort 14 illustré aux figures 2 et 3 constitue un agencement de relevage exerçant une force de relevage sur le timon d'attelage 2. Ainsi, lorsque l'ouverture 5 du timon d'attelage 2 accueille le crochet d'attelage 18 de l'autre chariot de manutention 17, le timon d'attelage 2 s'oppose à se libérer de ce crochet d'attelage 18. Un tel agencement de relevage peut être réalisé avec d'autres éléments qu'un ressort.

La figure 4 illustre schématiquement une situation où le timon d'attelage 2 est en une position de remorquage. En cette position, le timon d'attelage 2 est au maximum sorti du chariot de manutention 1 illustré à la figure 1. Le crochet timon d'attelage 2 se bute contre une extrémité avant de l'agencement de coulissement 3.

La figure 5 illustre une situation où le timon d'attelage 2 est en une position intermédiaire. En cette position, le timon d'attelage 2 peut librement coulisser dans deux directions opposées : dans une direction arrière et dans une direction avant.

La figure 6 illustre schématiquement une situation où le timon d'attelage 2 est en une position de rangement. En cette position, le timon d'attelage 2 est au maximum rentré dans le chariot de manutention 1 illustré à la figure 1. Dans cette situation, le timon d'attelage 2 peut éventuellement se buter contre une extrémité arrière de l'agencement de coulissement 3.

Les figures 4, 5, et 6 illustrent donc schématiquement que le timon d'attelage 2 puisse librement translater entre une position de remorquage en laquelle le timon d'attelage 2 est au maximum sorti du chariot de manutention 1, et une position de rangement en laquelle le timon d'attelage 2 est au maximum rentré dans le chariot de manutention 1. La position de remorquage permet à une chaîne de chariots de manutention de posséder un rayon de braquage relativement faible. Ainsi, la chaîne de chariots de manutention peut faire des demi-tours relativement serrés. La position de rangement permet à la chaîne de chariots de manutention d'occuper un espace relativement faible lorsque cette chaîne est en arrêt.

### REMARQUES FINALES

La description détaillée en référence aux figures est simplement une illustration de l'invention. L'invention peut être réalisée de nombreuses façons différentes. Afin d'illustrer ceci, quelques alternatives sont indiquées sommairement.

L'invention peut être appliquée avantageusement dans de nombreux types de dispositifs de transport. Un chariot de manutention n'est qu'un exemple d'un tel dispositif de transport. De façon globale, le terme « dispositif de transport » doit être interprété de façon large. Ce terme embrasse toute entité apte à effectuer une fonction de transport. Par exemple, un dispositif tracteur constitue un dispositif de transport dans le contexte la présente demande.

Il existe différentes façons de réaliser un agencement de coulissement. Les figures 3 et 4 illustrent simplement une réalisation parmi tant d'autres réalisations possibles. Par exemple, un agencement de coulissement peut comprendre qu'un seul rail de guidage. La base coulissante peut être sous forme, par exemple, d'un cylindre enveloppant se rail de guidage.

Il existe différentes façons de réaliser un timon d'attelage. La figure 2 illustre simplement une réalisation parmi tant d'autres réalisations possibles.

Il convient de noter qu'un dispositif de transport selon l'invention peut comprendre un crochet d'attelage qui est fixé au dispositif de transport par l'intermédiaire d'un agencement de coulissement de sorte que le crochet d'attelage puisse translater entre une position de remorquage en laquelle le crochet d'attelage est au plus éloigné d'un bord avant du dispositif de transport, et une position de rangement en laquelle le crochet d'attelage est au plus près du bord avant du dispositif de transport.

Bien que les dessins montrent différentes entités fonctionnelles sous forme de différents blocs, ceci n'exclut nullement des implémentations où une seule entité physique effectue plusieurs fonctions, ou plusieurs entités physiques effectuent collectivement une seule fonction. A cet égard, les dessins sont très schématiques.

Les remarques qui précèdent montrent que la description détaillée en référence aux figures, illustre l'invention plutôt qu'elle ne la limite. Les signes de références n'ont aucun caractère limitatif. Les verbes « comprendre » et « comporter » n'excluent pas la présence d'autres éléments ou d'autres étapes que ceux listés dans les revendications. Le mot « un » ou « une » précédant un élément ou une étape n'exclu pas la présence d'une pluralité de tels éléments ou de telles étapes.

## Revendications

1. Dispositif de transport (1) muni d'un timon d'attelage (2) ayant une ouverture (5) pouvant accueillir un crochet d'attelage (18) d'un autre dispositif de transport (17) afin d'établir une liaison de remorquage (16) entre l'un et l'autre dispositif de transport, le timon d'attelage étant fixé au dispositif de transport par l'intermédiaire d'un agencement de coulissement (3) de sorte que le timon d'attelage puisse translater entre une position de remorquage en laquelle le timon d'attelage est au maximum sorti du dispositif de transport, et une position de rangement en laquelle le timon d'attelage est au maximum rentré dans le dispositif de transport
**caractérisé en ce que** :
l'agencement de coulissement comprend une base coulissante (11) à laquelle le timon d'attelage est fixé et au moins un rail de guidage (9, 10) sur lequel la base coulissante peut coulisser, ainsi qu'un agencement de relevage (14) disposé entre la base coulissante et le timon d'attelage et apte à exercer une force de relevage (F) sur le timon d'attelage de sorte que lorsque l'ouverture du timon d'attelage accueille un crochet d'attelage (18) d'un autre dispositif de transport (17), le timon d'attelage s'oppose à se libérer du crochet d'attelage.

2. Dispositif de transport selon la revendication 1, dans lequel l'agencement de relevage (14) comprend un ressort reliant un point d'encrage (13) sur le timon d'attelage (2) à un point d'encrage (15) sur la base coulissante (11).

3. Dispositif de transport selon l'une quelconque des revendications 1 à 2, dans lequel le timon d'attelage (2) est fixé à la base coulissante (11) par l'intermédiaire d'un agencement d'articulation (12).

4. Dispositif de transport selon l'une quelconque des revendications 1 à 3, le dispositif de transport (1) étant sous forme d'un chariot de manutention apte à transporter des objets.

## Patentansprüche

1. Transportvorrichtung (1), die mit einer Anhängedeichsel (2) versehen ist, die eine Öffnung (5) aufweist, welche einen Anhängehaken (18) einer anderen Transportvorrichtung (17) aufnehmen kann, um eine Abschleppverbindung (16) zwischen der einen und der anderen Transportvorrichtung aufzubauen, wobei die Anhängedeichsel über eine Gleitanordnung (3) an der Transportvorrichtung befestigt ist, sodass sich die Anhängedeichsel zwischen einer Abschleppposition, in der die Anhängedeichsel maximal aus der Transportvorrichtung ausgefahren ist, und einer Verstauposition verschieben lässt, in der die Anhängedeichsel maximal in die Transportvorrichtung eingefahren ist,
**dadurch gekennzeichnet, dass**:
die Gleitanordnung eine gleitende Basis (11) umfasst, an der die Anhängedeichsel befestigt ist, und mindestens eine Führungsschiene (9, 10), auf der die gleitende Basis gleiten kann, sowie eine Hebeanordnung (14), die zwischen der gleitenden Basis und der Anhängedeichsel angeordnet ist und imstande ist, eine Hebekraft (F) auf die Anhängedeichsel auszuüben, sodass, wenn die Öffnung der Anhängedeichsel einen Anhängehaken (18) einer anderen Transportvorrichtung (17) aufnimmt, sich die Anhängedeichsel dagegen widersetzt, sich von dem Anhängehaken zu befreien.

2. Transportvorrichtung nach Anspruch 1, wobei die Hebeanordnung (14) eine Feder umfasst, die einen Verankerungspunkt (13) an der Anhängedeichsel (2) mit einem Verankerungspunkt (15) an der gleitenden Basis (11) verbindet.

3. Transportvorrichtung nach einem der Ansprüche 1 bis 2, wobei die Anhängedeichsel (2) über eine Artikulationsanordnung (12) an der gleitenden Basis (11) befestigt ist.

4. Transportvorrichtung nach einem der Ansprüche 1 bis 3, wobei die Transportvorrichtung (1) in Form eines Transportwagen ist, das imstande ist, Gegenstände zu transportieren.

## Claims

1. A transport device (1) provided with a drawbar (2) having an opening (5) that can receive a towing hook (18) of another transport device (17), in order to establish a towing link (16) between the two transport devices, the drawbar being attached to the transport device via a sliding arrangement (3) such that the drawbar can move in translation between a towing position in which the drawbar is maximally projecting from the transport device, and a storage position in which the drawbar is maximally retracted inside the transport device
**characterised in that**:
the sliding arrangement comprises a sliding base (11) to which the drawbar is attached and at least one guide rail (9, 10) on which the sliding base can slide, as well as a lifting arrangement (14) positioned between the sliding base and the drawbar and capable of exerting a lifting force (F) on the drawbar such that when the opening of the drawbar receives a towing hook (18) of another transport device (17), the drawbar prevents its own release from the towing hook.

2. A transport device according to claim 1, wherein the lifting arrangement (14) comprises a spring connecting an anchor point (13) on the drawbar (2) to an anchor point (15) on the sliding base (11).

3. A transport device according to any of claims 1 to 2, wherein the drawbar (2) is attached to the sliding base (11) via a hinge arrangement (12).

4. A transport device according to any of claims 1 to 3, the transport device (1) having the form of a handling trolley capable of carrying objects.
